Europäisches Patentamt

(19) European Patent Office

Office européen des brevets

(11) **EP 0 762 441 A1**

(12) **EUROPEAN PATENT APPLICATION**
published in accordance with Art. 158(3) EPC

(43) Date of publication:
12.03.1997 Bulletin 1997/11

(21) Application number: 95918751.9

(22) Date of filing: 19.05.1995

(51) Int. Cl.$^6$: **H01F 1/06**, H01F 1/11,
B22F 1/02, B22F 9/18,
G11B 5/712, C01G 49/00

(86) International application number:
PCT/JP95/00965

(87) International publication number:
WO 95/32510 (30.11.1995 Gazette 1995/51)

(84) Designated Contracting States:
DE FR GB NL

(30) Priority: 24.05.1994 JP 134994/94

(71) Applicant: DAIKIN INDUSTRIES, LIMITED
Osaka-shi, Osaka-fu 530 (JP)

(72) Inventors:
• TSUJI, Masayuki,
Daikin Ind., Ltd.
Settsu-shi, Osaka-fu 566 (JP)
• SHIBUYA, Yoshiyuki,
Daikin Ind., Ltd.
Settsu-shi, Osaka-fu 566 (JP)

• ARASE, Takuya,
Daikin Ind., Ltd.
Settsu-shi, Osaka-fu 566 (JP)
• KAMIYA, Fumihiro,
Daikin Ind., Ltd.
Settsu-shi, Osaka-fu 566 (JP)
• INO, Tadashi,
Daikin Ind., Ltd.
Settsu-shi, Osaka-fu 566 (JP)
• DAIMON, Shigeo,
Daikin Ind., Ltd.
Settsu-shi, Osaka-fu 566 (JP)

(74) Representative: Barz, Peter, Dr.
Patentanwalt
Kaiserplatz 2
80803 München (DE)

(54) **FINE COATED PARTICLE, PROCESS FOR PRODUCING THE SAME, AND USE THEREOF**

(57) A fine magnetic particle which contains at least either iron carbide or metallic iron and may also contain carbon, and wherein the iron carbide and metallic iron are coated with the following compound (a) alone or a mixture thereof with at least one of the following compounds (b) to (d): (a) a compound containing at least one atom selected from among those of the 3rd, 4th, 5th and 6th periods of group 2 and those of the 4th, 5th and 6th periods of each of groups 5 and 6 in the Periodic Table; (b) a compound containing at least one atom selected from among those of the 5th ad 6th periods of each of groups 3 and 4; (c) a compound containing at least one atom selected from among those of the 4th period of each of groups 7 to 11; and (d) a compound containing at least one atom selected from among those of the 3rd period of each of groups 13 and 14.

EP 0 762 441 A1

## Description

(Technical field)

The present invention relates to coated acicular fine particulate materials, processes for preparing the materials, and magnetic coating compositions and magnetic recording media containing the material.

(Background art)

Presently, magnetic recording media are commercially available which have various magnetic characteristics. Higher recording densities are the properties required of magnetic media of the next generation. Magnetic powders of higher coercive force are essential in fulfilling this requirement. The coercive force of magnetic powders is dependent largely on magnetic shape anisotropy attributable to the shape and on magnetic crystalline anisotropy attributable to the magnetic energy. PCT/JP94/00242 discloses a magnetic powder which is improved in magnetic shape anisotropy and thereby made higher in coercive force, i.e., a fine particulate magnetic material which is coated with a compound containing at least one atom selected from among atoms of Groups III and IV of the Periodic Table in Periods 5 and 6 and which contains at least one substance selected from among iron carbides having an excellent acicular property, i.e., a great axial ratio (long axis/short axis), and metallic iron.

On the other hand, the next-generation magnetic media use short recording wavelengths for high-density recording, whereas it is known that the reproduction output abruptly drops if the wavelength becomes nearly equal to the size of the particulate magnetic material. Accordingly the above-mentioned particulate magnetic material which has an excellent acicular property, namely, a great axial ratio, is not satisfactory for use in high-density recording despite its high coercive force since high-density records can not be reproduced with a sufficient output if the material is used as it is.

This problem is avoidable by using a particulate magnetic material having an excellent acicular property, i.e., a great axial ratio, and yet smaller than the recording wavelength in particle size, but the material must then be made invariably small in the length of short axis, becomes too slender to exhibit satisfactory physical strength and can not be produced actually. Although it is possible to produce a particulate magnetic material which is made shorter (smaller) only in long axis, the axial ratio then becomes smaller to result in impaired magnetic shape anisotropy and a lower coercive force, rendering the material unable to fulfill the foregoing essential requirement.

An object of the present invention is to provide a particulate magnetic material which has a high coercive force although small in axial ratio and which is suited to high-density recording, a process for producing the material, and a magnetic coating composition and magnetic recording medium which have the material incorporated therein.

(Disclosure of the invention)

The present invention provides a fine particulate magnetic material containing at least one substance selected from an iron carbide and metallic iron and further containing or not containing carbon, the iron carbide and the metallic iron being coated with:

(a) a compound containing at least one atom selected from among atoms of Group II of the Periodic Table in Periods 3, 4, 5 and 6 and atoms of Groups V and VI thereof in Periods 4, 5 and 6.

The invention further provides a fine particulate magnetic material containing at least one substance selected from an iron carbide and metallic iron and further containing or not containing carbon, the iron carbide and the metallic iron being coated with:

(a) a compound containing at least one atom selected from among atoms of Group II of the Periodic Table in Periods 3, 4, 5 and 6 and atoms of Groups V and VI thereof in Periods 4, 5 and 6,
and with a compound selected from the group consisting of:
(b) a compound containing at least one atom selected from among atoms of Groups III and IV of the Periodic Table in Periods 5 and 6, and
(c) a compound containing at least one atom selected from among atoms of Groups VII to XI of the Periodic Table in Period 4.

The invention further provides a fine particulate magnetic material containing at least one substance selected from an iron carbide and metallic iron and further containing or not containing carbon, the iron carbide and the metallic iron being coated with:

(a) a compound containing at least one atom selected from among atoms of Group II of the Periodic Table in Periods 3, 4, 5 and 6 and atoms of Groups V and VI thereof in Periods 4, 5 and 6,

(b) a compound containing at least one atom selected from among atoms of Groups III and IV of the Periodic Table in Periods 5 and 6, and

(c) a compound containing at least one atom selected from among atoms of Groups VII to XI of the Periodic Table in Period 4.

The invention further provides a process for producing these fine particulate materials, and a magnetic coating composition and a magnetic recording medium having the material incorporated therein.

The fine particulate material of the present invention is characterized in that it is coated with:

(a) a compound containing at least one atom selected from among atoms of Group II of the Periodic Table in Periods 3, 4, 5 and 6 and atoms of Groups V and VI thereof in Periods 4, 5 and 6,

or with the compound (a) and at least one of:

(b) a compound containing at least one atom selected from among atoms of Groups III and IV of the Periodic Table in Periods 5 and 6,

(c) a compound containing at least one atom selected from among atoms of Groups VII to XI of the Periodic Table in Period 4, and

(d) when required, a compound containing at least one atom selected from among atoms of Groups XIII and XIV of the Periodic Table in Period 3. The Periodic Table hereinafter referred to is based on the new classification of groups prescribed by IUPAC in l989.

The fine particulate material of the invention is a fine particulate magnetic material which contains at least one of an iron carbide and metallic iron and which may further contain carbon. More specifically, the material is:

(i) a fine particulate material containing an iron carbide,
(ii) a fine particulate material containing an iron carbide and metallic iron, or
(iii) a fine particulate material containing metallic iron.

The fine particulate material (i ) containing iron carbide can be prepared by the method described in JP-B-43683/1989 and has the features of being higher in coercive force and saturation magnetization than conventional iron oxide magnetic powders and excellent in corrosion resistance. Such iron carbide is prepared, for example, by (a) contacting with heating a reducing agent containing no carbon atom with a starting material iron compound selected from among iron oxyhydroxides and iron oxides when required and (b) thereafter contacting a reducing-carbonizing agent containing a carbon atom or mixture of the agent and a reducing agent containing no carbon atom with the iron compound.

Examples of preferred iron oxyhydroxides are $\alpha$ - FeOOH (goethite), $\beta$ -FeOOH (akaganite) and $\gamma$ -FeOOH (lepidocrosite), and preferred iron oxides are $\alpha$ -Fe$_2$O$_3$ (hematite), $\gamma$ -Fe$_2$O$_3$ (maghemite) and Fe$_3$O$_4$ (magnetite).

The above $\alpha$ -Fe$_2$O$_3$ or $\gamma$ -Fe$_2$O$_3$ is, for example, any of one prepared by heating $\alpha$ -FeOOH, $\beta$ -FeOOH or $\gamma$ -FeOOH at about 200 to about 350 °C , followed by dehydration, $\alpha$ -Fe$_2$O$_3$ or $\gamma$ -Fe$_2$O$_3$ prepared by heating the resulting product further at about 350 to about 900°C to compact the crystals, and others.

The iron oxyhydroxides or iron oxides are usually at least 1, preferably 1 to 20, and more preferably 3 to 10 in average axial ratio and usually up to 2.0 $\mu$m, preferably 0.01 to 2.0 $\mu$m, and more preferably 0.05 to 0.3 $\mu$m, in average particle size (long axis). The fine particulate iron carbide prepared from such a material is almost unchanged from the starting material in average axial ratio and average particle size.

JP-A-106408/1986 describes in detail the steps (a) and (b) for preparing the fine particulate material containing iron carbide and the reducing agent and reducing-carbonizing agent for use in these steps. Especially desirable carbon-free reducing agents are H$_2$ and NH$_2$NH$_2$, and desirable carbon-containing reducing-carbonizing agents are CO, CH$_3$OH, HCOOCH$_3$ and saturated or unsaturated aliphatic hydrocarbons having 1 to 5 carbon atoms.

In the step (a) of the above, the reducing agent containing no carbon atom can be used as it is or as diluted. Examples of diluents are N$_2$, argon, helium, etc. The dilution ratio is suitably selected but is preferably about 1.1 to about 10 times (by volume). The contact temperature, contact time, gas flow rate and other conditions depend, for example, on the production history, average axial ratio, average particle size and specific surface area of the acicular iron oxyhydroxide or acicular iron oxide. The preferred contact temperature is about 200 to about 700 °C , preferably about 300 to about 400 °C . The preferred contact time is about 0.5 to about 6 hours. The preferred gas flow rate (excluding diluent) is about 1 to about 1000 ml S.T.P./min, more preferably about 5 to about 500 ml S.T.P./min, per gram of the starting material. The contact pressure inclusive of that of the diluent is usually 1 to 2 atm. although not imitative particularly.

In the step (b) of the above, the reducing-carbonizing agent containing carbon atom or a mixture thereof with the reducing agent containing no carbon atom can be used as it is or as diluted. When the mixture is used, the mixing ratio of the reducing-carbonizing agent containing carbon atom and the reducing agent containing no carbon atom is suitably selected but is preferably 1/0.05 to 1/5 by volume. Contact conditions are also suitably selected but the preferred contact temperature is about 250 to about 400 °C , more preferably about 300 to about 400 °C . The preferred contact time is about 0.5 to 6 hours when the contact in (a) is conducted, and about 1 to about 12 hours when the contact in (a) is not conducted. The preferred gas flow rate (excluding diluent) is about 1 to about 1000 ml S.T.P./min, more preferably about 5 to about 500 ml S.T.P./ml, per gram of the starting iron compound. The contact pressure inclusive of that of the diluent is usually 1 to 2 atm. although not limitative particularly.

The product thus obtained consists chiefly of iron carbide, while free carbon and iron oxide can also be present therein. The fine particulate material of the invention containing iron carbide contains at least 20 % , preferably at least 50 % and more preferably at least 60 % , of iron carbide, which is predomonantly $Fe_5C_2$, while $Fe_7C_3$, FeC and $Fe_3C$ can be present. The product can further be covered with a protective iron oxide coating by contacting the product with a gas containing oxygen. Unreacted iron oxide can also be present.

The fine particulate material (ii ) of the invention containing iron carbide and metallic iron can be prepared by the method described in PCT/JP93/00060, has a specific range of magnetic characteristics suitable for audio metal tapes, is low in noise level and can be prepared, for example, by contacting a gas mixture of a reducing agent having no carbon atom and a reduction controlling agent with the above fine particulate material containing iron carbide.

The reduction control agent for use in the above means an agent capable of controlling the velocity of reduction of iron carbide with the above reducing agent containing no carbon atom. Examples of such agents are carbon-containing compounds with one or two carbon atoms, and are more specifically carbon monoxide (CO), carbon dioxide ($CO_2$), methane, methanol, ethanol, formic acid, methyl formate, etc., among which CO and $CO_2$ are preferable. CO is especially preferable.

The gas mixture of the reducing agent containing no carbon atom and reduction control agent for use in the reduction of the above comprises a very large amount of the reducing agent containing no carbon atom and a very small amount of reduction control agent. The reducing agent containing no carbon atom to reduction control agent ratio by volume is preferably 1:0.004 to 1: 0.0005, more preferably 1:0.0025 to 1:0.005, most preferably 1:0.002 to 1:0.007. If the proportion of reduction control agent exceeds the above range, the reducing reaction slows down or fails to proceed, whereas when the proportion is smaller than the above range, the agent produces no effect. A part of the reaction control agent present and the hydrocarbon and carbon produced by the reduction of iron carbide can be separated out as free carbon on the surface of metallic iron or iron carbide depending on the conditions involved, which constitute a part of the components of the present fine particulate material (ii ).

In the process for preparing the fine particulate material (ii ) of the present invention containing iron carbide and metallic iron, the preferred contact temperature is about 300 to about 400 °C . The preferred contact time varies with the amount of material to be treated, treating conditions and composition of fine particles of the invention to be desired, and is about 0.2 to about 6 hours. When required, a diluting agent such as $N_2$, Ar or He is usable. The diluting ratio can be determined as desired, and may be, for example, 1.1 to 10 times the amount (by volume) of the gas mixture. The preferred rate of flow of the gas mixture other than the diluting agent is about 1 to 1000 ml S.T.P./min per gram of the iron carbide material. Although not limited specifically, the contact pressure of the gas mixture inclusive of the diluting agent is usually 1 to 2 atm.

The fine particulate material (ii ) of the present invention preferably contains 10 to 75 wt.% of iron carbide, 15 to 80 wt.% of metallic iron and 5 to 13 wt.% of free carbon. The carbon content of the fine particles of the above can be determined only by elementary analysis, and no carbon or no graphite is detectable using X-rays. It is speculated that the carbon can be amorphous, but details still remain unknown. The carbon content determined by elementary analysis is the total carbon content which is the sum of the carbon content of the iron carbide (7.92 % calculated for $Fe_5C_2$) and free carbon content. The fine particles of the above contain free carbon or iron carbide in addition to metallic iron, and are therefore relatively higher than the conventional metallic magnetic powder in corrosion resistance.

The fine particulate material (iii ) of the invention containing metallic iron can be prepared by the method described in JP-A-228502/1992 and is prepared, for example, by contacting a reducing agent containing no carbon atom with the foregoing fine particulate material containing iron carbide. The above fine particulate material containing metallic iron is equivalent to conventional metallic iron in coercive force but superior thereto in corrosion resistance and saturation magnetization.

The reason why the fine particulate material containing metallic iron has excellent magnetic characteristics still remains to be clarified. The conventional fine particulate metallic iron is obtained by directly reducing fine particulate iron oxide, so that the reduction produces water which causes deformation and evolves heat which causes sintering and deformation, failing to afford highly dispersible particles. Further use of a large amount of sintering preventing agent results in lower magnetic characteristics relative to the density, failing to give particles of high saturation magnetization. In contrast, the reduction process for producing the fine particulate material containing metallic iron does not produce a large amount of water and therefore gives a product of high coercive force and high dispersibility with use of a lesser amount of sintering preventing agent, permitting the metallic iron to exhibit an inherent highly magnetizable property. Furthermore, the reduction of iron carbide to metallic iron forms carbon, which partly separates out (X-ray diffractometry appears to indicate that the separating-out carbon is not graphite but amorphous carbon) to effectively protect the active surface of the metallic iron and impart corrosion resistance, enabling the metallic iron to retain the excellent magnetic characteristics free of deterioration over a prolonged period of time.

Examples of reducing agents having no carbon atom are, like those previously mentioned, $H_2$, $NH_2NH_2$ and the like. The preferred contact temperature is about 300 to about 500 °C , and the preferred contact time is about 0.5 to about 6 hours. When required, diluents, the same as those previously mentioned, are usable. The preferred flow rate is about 1 to about 1000 ml S.T.P./min per gram of the acicular fine particulate material containing iron carbide, exclusive of the diluent. The contact pressure including that of the diluent is usually 1 to 2 atm. but is not limited particularly.

The fine particulate material containing metallic iron of the present invention consists primarily of metallic iron and contains usually 90 to 50 wt.% of metallic iron and usually 2 to 20 wt.% , preferably 5 to 15 wt.% , of carbon. If the carbon content is greater than this range, the improvement in magnetization will be less, whereas when the carbon content is smaller, lower corrosion resistance will result. The carbon content is expressed in terms of a total carbon content which is the sum of the amount of carbon produced during the process for preparing iron carbide serving as the starting material and the amount of carbon formed and separating out during the preparation process of the invention. According to the invention, the content only of carbon can be determined by elementary analysis, while the carbon is not detectable in the form of iron carbide or graphite with use of X-rays. Although we speculate that the carbon might be amorphous, the type of the carbon still remains to be clarified. An iron oxide can further be present in the fine particulate material containing metallic iron of the invention. The fine particulate material containing metallic iron obtained according to the invention can be covered with a protective iron oxide coating over the surface by contacting the iron with an oxygen-containing gas. An unreacted iron oxide can also be present in the iron.

In the present invention, the above fine particulate material is characterized in that it is coated with:

(a) a compound containing at least one atom selected from among atoms of Group II of the Periodic Table in Periods 3, 4, 5 and 6 and atoms of Groups V and VI thereof in Periods 4, 5 and 6,

or with the compound (a) and at least one of:

(b) a compound containing at least one atom selected from among atoms of Groups III and IV of the Periodic Table in Periods 5 and 6,

(c) a compound containing at least one atom selected from among atoms of Groups VII to XI of the Periodic Table in Period 4, and

(d) when required, a compound containing at least one atom selected from among atoms of Groups XIII and XIV of the Periodic-Table in Period 3.

Examples of atoms of Group II in Periods 3, 4, 5 and 6 are magnesium, calcium, strontium and barium, among which calcium is particularly preferable. When the particulate material is to be coated with a compound of such an atom, the compound may be in the form of a hydrochloride, sulfate, nitrate, acetate, oxalate, organic metal salt or the like, and is not limited to a specific form.

Examples of atoms of Group III in Periods 5 and 6 are yttrium, lanthanum and atoms of the lanthanide series. The atoms of the lanthanide series include cerium, praseodymium, neodymium, promethium, samarium, europium, gadolinium, terbium, dysprosium, holmium, erbium, thulium, ytterbium and lutetium. Examples of atoms in Group IV in Periods 5 and 6 are zirconium and hafnium. Among these preferable are neodymium and zirconium. When the particulate material is to be coated with a compound of such an atom, the compound may be in the form of a hydrochloride, sulfate, nitrate, acetate, oxalate, organic metal salt or the like, and is not limited to a specific form.

Examples of atoms of Groups VII to XI in Period 4 are manganese, iron, cobalt nickel and copper, among which cobalt is particularly preferable. Examples of manganese compounds useful for the invention are manganese sulfate, manganese nitrate, manganese chloride, manganese bromide and the like. Examples of iron compounds are iron sulfate, iron chloride, iron nitrate and the like. Examples of cobalt compounds are cobalt chloride, cobalt nitrate, cobalt sulfate, cobalt acetate and the like. Examples of nickel compounds are nickel chloride, nickel nitrate, nickel sulfate, nickel bromide, nickel acetate and the like. Examples of copper compounds are copper sulfate, copper chloride, copper nitrate, copper acetate and the like.

In the present invention, examples of atoms of Groups V in Periods 4, 5 and 6 are vanadium, niobium and tantalum. Examples of atoms of Groups VI in Periods 4, 5 and 6 are chromium, molybdenum and tungsten. Among these particularly preferable are niobium, tantalum and tungsten. Examples of vanadium, niobium and tantalum compounds are vanadium chloride, vanadium fluoride, niobium pentachloride, niobium hydrogenoxalate, potassium niobium fluoride, tantalum chloride and tantalum fluoride. Examples of chromium, molybdenum and tungsten compounds are chromium chloride, chromium sulfate, chromium acetate, molybdenum chloride, ammonium molyodate, sodium molybdate, tungsten chloride, ammonium tungstate and sodium tungstate.

In the present invention, example of atom of Group XIII in Period 3 is aluminum, and example of atom of Group XIV in Period 3 is silicon. Examples of aluminum compounds are aluminum sulfate, aluminum nitrate, aluminum chloride, various aluminum alums, sodium aluminate, potassium aluminate and the like. Examples of silicon compounds are

EP 0 762 441 A1

sodium orthosilicate, sodium metasilicate, potassium metasilicate, water glasses of varying compositions, etc.

According to the invention, the compounds (a), (b), (c) and (d) can be applied for coating in an amount of at least 0.01 atomic % , preferably at least 0.1 atomic % , based on the iron atoms. The amount is up to 30 atomic % , preferably up to 10 atomic % , more preferably up to 2 atomic % . Preferably, the entire amount of the coating compound should not exceed 100 atomic % based on the iron atoms because if the entire amount is greater, impaired magnetic characteristics will usually result per density. It is especially desired that the fine particulate material of the invention be coated with 0.02 to 5 atomic % of Nb, 0.1 to 10 atomic % of Zr and 0.2 to 50 atomic % of Co based on the iron atom.

The fine acicular particulate material of the invention containing an iron carbide can be prepared, for example, by the steps of (A) coating a starting material iron compound selected from among iron oxyhydroxides and iron oxides with at least one of the compounds (a), (b) and (c), and (B) contacting with heating the iron compound coated by the step (A) with a reducing agent containing no carbon atom when required and thereafter contacting the iron compound with a reducing-carbonizing agent containing a carbon atom or a mixture of the reducing-carbonizing agent and a reducing agent containing no carbon atom with heating.

The fine particulate material of the invention containing an iron carbide and metallic iron can be prepared, for example, by the steps (A) coating a starting material iron compound selected from among iron oxyhydroxides and iron oxides with at least one of the compounds (a), (b) and (c),
(B) contacting with heating the iron compound coated by the step (A) with a reducing agent containing no carbon atom when required and thereafter contacting the iron compound with a reducing-carbonizing agent containing a carbon atom or a mixture of the reducing-carbonizing agent and a reducing agent containing no carbon atom with heating, and
(C) contacting the reaction product obtained by the step (B) with a mixture of a reducing agent containing no carbon atom and a reduction controlling agent with heating.

The fine particulate material of the invention containing metallic iron can be prepared, for example, by the steps (A) coating a starting material iron compound selected from among iron oxyhydroxides and iron oxides with at least one of the compounds (a), (b) and (c),
(B) contacting with heating the iron compound coated by the step (A) with a reducing agent containing no carbon atom when required and thereafter contacting the iron compound with a reducing-carbonizing agent containing a carbon atom or a mixture of the reducing-carbonizing agent and a reducing agent containing no carbon atom with heating, and
(C) contacting the reaction product obtained by the steep (B) with a reducing agent containing no carbon atom with heating.

In addition to the application of the compound (a), (b) or (c) for coating, it is also possible according to the invention to perform the step of coating the coated material with (d) a compound containing at least one atom selected from among atoms of Groups XIII and XIV of the Periodic Table in Period 3.

The fine particulate material of the invention containing an iron carbide can be prepared also from a starting material iron compound selected from among iron oxyhydroxides and iron oxides which are coated with at least one of the compounds (a), (b) and (c), by the step of, when required, contacting the iron compound with a reducing agent containing no carbon atom with heating and thereafter contacting the iron compound with a reducing-carbonizing agent containing a carbon atom or with a mixture of the reducing-carbonizing agent and a reducing agent containing no carbon atom with heating.

The fine particulate material of the invention containing an iron carbide and metallic iron can be prepared also by the step (A) contacting a starting material iron compound selected from among iron oxyhydroxides and iron oxides which are coated with at least one of the compounds (a), (b) and (c), with, when required, a reducing agent containing no carbon atom with heating and thereafter contacting the iron compound with a reducing-carbonizing agent containing a carbon atom or with a mixture of the reducing-carbonizing agent and a reducing agent containing no carbon atom with heating, and
the step of (B) contacting the reaction product obtained by the step (A) with a mixture of a reducing agent containing no carbon atom and a reduction controlling agent with heating.

The fine particulate material of the invention containing metallic iron can be prepared also by the step (A) contacting a starting material iron compound selected from among iron oxyhydroxides and iron oxides which are coated with at least one of the compounds (a), (b) and (c), with, when required, a reducing agent containing no carbon atom with heating and thereafter contacting the iron compound with a reducing-carbonizing agent containing a carbon atom or with a mixture of the reducing-carbonizing agent and a reducing agent containing no carbon atom with heating, and
the step of (B) contacting the reaction product obtained by the step (A) with a reducing agent containing no carbon atom with heating.

Further according to the invention, it is also possible to use a starting material iron compound coated with the compound (a), (b) or (c) and with the compound (d) containing at least one atom selected from among atoms of Groups XIII and XIV of the Periodic Table in Period 3.

In the present invention, the compounds to be used for coating are applied in a desired order. While these compounds are applied by a desired method, it is preferable to coat the starting material iron compound, for example, by:

(1) dispersing the iron compound in water,

(2) executing at least once the step of admixing a solution containing at least one of the coating compounds with the material from the preceeding step and the step of causing the coating compound to form a salt sparingly soluble in water to thereby precipitate the coating compound, and

(3) filtering the resulting mixture, followed by washing and drying.

According to the invention, the acicular fine particulate material is coated with the coating compound at least over the surface thereof, and the surface may be coated partly or entirely. The salt sparingly soluble in water can be formed by a suitably selected method, for example, usually by pH adjustment or addition of a compound having an anion for converting the coating compound to a sparingly soluble salt. The drying step is executed in a usual manner, for example, by air drying with heating at about 50 to about 150 °C.

The fine particulate materials obtained by the present invention have the shape of the starting material iron compound. The fine particulate material (i) containing iron carbide apparently remains unchanged from the starting material in shape, i.e., in average particle size and average axial ratio. On the other hand, the fine particulate material (ii) containing iron carbide and metallic iron, and the fine particulate material (iii) containing metallic iron tend to be smaller in particle size (long axis), but remain almost unchanged in axial ratio due to a diminution in short axis, and are generally within the foregoing ranges in shape. More particularly, they are usually up to 2.0 $\mu$m, preferably 0.01 to 2.0 $\mu$m, in average particle size (long axis) and 1 to 20, preferably 3 to 10, in average axial ratio.

The magnetic coating composition of the present invention can be prepared by dispersing the above fine particles of the present invention in an organic solvent together with a binder. To the composition are added, as required, a dispersing agent, lubricant, abrasive, antistatic agent and like additives.

Hitherto known thermoplastic resins, thermosetting resins, reaction-type resins, or mixtures thereof, can be used as binders in the present invention.

Suitable thermoplastic resins are those which have a softening point of about 150 °C or less, an average molecular weight of about 10,000 to 200,000, and a degree of polymerization of about 200 to 2,000, e.g., a vinyl chloride-vinyl acetate copolymer, a vinyl chloride-vinylidene chloride copolymer, a vinyl chloride-acrylonitrile copolymer, an acrylate-acrylonitrile copolymer, an acrylate-vinylidene chloride copolymer, an acrylate-styrene copolymer, a methacrylate-acrylonitrile copolymer, a methacrylate-vinylidene chloride copolymer, a methacrylate-styrene copolymer, a urethane elastomer, a polyvinyl fluoride, a vinylidene chloride-acrylonitrile copolymer, a butadiene-acrylonitrile copolymer, a polyamide resin, polyvinyl butyral, cellulose derivatives such as cellulose acetate butyrate, cellulose diacetate, cellulose triacetate, cellulose propionate, cellulose nitrate, and the like, a styrene-butadiene copolymer, a polyester resin, a chlorovinyl ether-acrylate copolymer, an amino resin, various synthetic rubber based thermoplastic resins and mixtures thereof.

Suitable thermosetting resins or reaction-type resins have a molecular weight of about 200,000 or less as a coating solution, and when heated after coating and drying, the molecular weight becomes infinite due to reactions such as condensation, addition, and the like. Of these resins, preferred resins are those resins which do not soften or melt before the resin thermally decomposes. Representative examples of these resins are a phenol resin, an epoxy resin, a polyurethane hardening type resin, a urea resin, a melamine resin, an alkyd resin, a silicone resin, an acryl based reactive resin, an epoxy-polyamide resin, a mixture of a high molecular weight polyester resin and an isocyanate prepolymer, a mixture of a methacrylic acid copolymer and a diisocyanate-prepolymer, a mixture of a polyester-polyol and a polyisocyanate, a urea-formaldehyde resin, a mixture of a low molecular weight glycol, a high molecular weight diol and triphenylmethane triisocyanate, a polyamine resin, and mixtures thereof, etc.

These binders can be used singly or in mixture, and the additives can be added to the binders. The binders are used in an amount of preferably 10 to 400 parts by weight, more preferably 30 to 200 parts by weight per 100 parts by weight of the acicular particles.

The organic solvents include ketones such as acetone, methyl ethyl ketone, methyl isobutyl ketone and cyclohexanone; alcohols such as methanol, ethanol, propanol and butanol; esters such as methyl acetate, ethyl acetate, butyl acetate, ethyl lactate and glycol monoethyl ether acetate; ethers such as ether, glycol dimethyl ether, glycol monoethyl ether and dioxane; tars (aromatic hydrocarbons) such as benzene, toluene and xylene; chlorinated hydrocarbons such as methylene chloride, ethylene chloride, carbon tetrachloride, chloroform, ethylene chlorohydrin and dichlorobenzene; and the like.

The dispersing agents used include aliphatic acids having 12 to 18 carbon atoms ($R^1$COOH wherein $R^1$ is an alkyl group having 11 to 17 carbon atoms) such as caprylic acid, capric acid, lauric acid, myristic acid, palmitic acid, stearic acid, oleic acid, elaidic acid, linolic acid, linolenic acid and stearolic acid; metal soaps comprising an alkali metal (such as Li, Na and K) or an alkaline earth metal (such as Mg, Ca and Ba) salt of the above aliphatic acids; lecithin, etc. In addition, higher alcohols having 12 or more carbon atoms and sulfuric esters can be used. These dispersing agents are added in an amount of 1 to 20 parts by weight per 100 parts by weight of the binder.

The lubricants used include silicone oil, graphite, molybdenum disulfide, tungsten disulfide, aliphaticesters obtained from monobasic aliphatic acids having 12 to 16 carbon atoms and monohydric alcohols having 3 to 12 carbon atoms, aliphatic esters obtained from monobasic aliphatic acids having 17 or more carbon atoms and monohydric alcohols (a total of the carbon atoms of the monobasic aliphatic acid and the carbon atoms of the monohydric alcohol are 21 to 23 ), etc. These lubricants are added in an amount of 0.2 to 20 parts by weight per 100 parts by weight of the binder.

The abrasives used include those which are generally used, such as fused alumina, silicon carbide, chromium oxide, corundum, artificial corundum, diamond, artificial diamond, garnet and emery (main components: corundum and magnetite). The average particle diameter of these abrasives is 0.05 to 5 $\mu$m, preferably 0.1 to 2 $\mu$m. These abrasives are added in an amount of 7 to 20 parts by weight per 100 parts by weight of the binder.

Examples of the antistatic agents are natural surfactants such as saponin, nonionic surfactants such as alkylene oxide-base, glycerin-base or glycidol-base surfactant; cationic surfactants such as higher alkylamines, quaternary ammonium salts, pyridine and like heterocyclic compounds, phosphonium or sulfonium compounds; anionic surfactants such as those containing a carboxylic acid, sulfonic acid, phosphoric acid, sulfate group or phosphate group and like acid group; ampholytic surfactants such as amino acids, amino sulfonic acid, sulfate or phosphate of aminoalcohol, etc. These antistatic agent can be used singly or in mixture. Although the above compounds are used as antistatic agents, the compounds can be used in some cases, to improve the dispersibility, magnetic characteristics, lubricability or coating ability. These antistatic agents are added in an amount of 1 to 2 parts by weight per 100 parts by weight of the binder.

The magnetic recording medium of the present invention are obtained by coating the above magnetic coating composition on a substrate (support).

The thickness of the support is about 5 to 50 $\mu$m, preferably about 10 to 40 $\mu$m. The materials used for the support include polyesters such as polyethylene terephthalate and polyethtylene-2,6-naphthalate, polyolefins such as polypropylene, cellulose derivatives such as cellulose triacetate and cellulose diacetate, polycarbonate, and the like.

For preventing static discharge or preventing transfer printing, the above supports may have a back coat on the surface opposite the surface provided with the magnetic layer.

The supports may be in any shape such as a tape, sheet, card, disc or drum, and various materials can be used depending upon the shape desired and end use contemplated.

The magnetic coating composition can be applied on the support by various conventional methods including air doctor coating, blade coating, air knife coating, squeeze coating, impregnation coating, reverse roll coating, transfer roll coating, gravure coating, kiss coating, cast coating and spray coating. Other coating methods can also be used.

The magnetic layer formed on the support by the above method is dried after, if desired, the coating has been subjected to a treatment for orienting the magnetic powder in the layer. If required, the magnetic layer can be subjected to a surface smoothening treatment, or cut to the desired shape, to thereby form the magnetic recording material of this invention. In the above orienting treatment for the magnetic layer, the orienting magnetic field can be either an AC or DC magnetic field with a field strength of about 500 to 5,000 gauss. The drying temperature can range from about 50 to about 100 °C , and the drying time is about 3 to 10 minutes.

(Best mode for carrying out the invention)

The invention will be described below in detail by showing examples and comparative examples.
In the following examples, characteristic, etc. are determined by the methods given below.

(1) Magnetic characteristics:

Using a magnetic characteristics measuring device of the sample-vibrating type, the powder was tested in a magnetic field with a strength of 10 kOe for coercive force and saturation magnetization, and the sheet was tested at a field strength of 5 kOe for coercive force (Hc, Oe), saturation magnetic flux density (Bm, gauss), residual magnetic flux density (Br, gauss) and square ratio (Br/Bm).

(2) SFD (Switching Field Distribution)

SFD was determined by preparing a differentiation curve of coercive force with use of the differentiation circuit of the above device for a sheetlike test piece, measuring the half-value width of the curve and dividing the measured value by the peak value of coercive force of the curve.

(3) Elementary analysis for C, H and N

The sample was subjected to elementary analysis in the conventional method using MT2 CHN CORDER Yanaco, product of Yanagimoto Mfg. Co., Ltd, with passage of oxygen (helium carrier) at 900 °C .
The corrosion resistance of the fine particulate material of the invention can be evaluated by the corrosion resistance test method described in JP-A-228502/1992. More specifically, the sample was allowed to stand in air at 100 °C for 8 hours, and the resulting reduction in the amount of magnetization ($\sigma$ s) was calculated as the corrosion resistance (%),

$$\text{Corrosion resistance (\%)} = (1 - b/a) \times 100$$

where a and b are the amounts of magnetization ($\sigma$ s) of the sample before and after the standing, respectively. The lower the value, the greater is the corrosion resistance.

Example 1

In 5 liters of water were dispersed 100 g of acicular goethite particles, 0.17 $\mu$m in average particle size (long axis) and 6 in average axial ratio. Added dropwise to the dispersion were first a solution of 3.7 g of $ZrCl_4$ in 100 ml of water to give a Zr/Fe ratio of 1.4 atomic %, then a solution of 0.58 g of $NbCl_5$ in 10 ml of HCl, as diluted with water, to give an Nb/Fe ratio of 0.19 atomic % and thereafter a solution of 57 g of $CoSO_4 \cdot 7H_2O$ in 100 ml of water to give a Co/Fe ratio of 18 atomic %. The resulting solution was adjusted to pH 9 by adding an aqueous solution of $Na_2CO_3$ dropwise thereto, followed by filtration, washing with water and heat-treatment in a muffle furnace at 500 °C for 1 hour, affording a powder.

The powder (40 g) was placed into a reactor tube and treated at 35 °C for 2.5 hours while passing CO through the tube at a flow rate of 5 liters/min. The powder was reacted for 1 hour with the gas replaced by 10 liters/min of $H_2$ and cooled nearly to room temperature with the gas replaced by nitrogen. The gas was slowly replaced by air to obtain a powder containing metallic iron. The X-ray (Cu K$\alpha$ source) diffraction pattern of the product was found to be identical with that of ASTM, X-Ray Powder Data File 6-0696, Fe. The powder containing metallic iron contained 11 wt. % of carbon based on the powder and had the magnetic characteristics of 1875 Oe in coercive force Hc and 160.2 emu/g in saturation magnetization $\sigma$ s. When observed under a transmission electron microscope, the powder was 0.13 $\mu$m in average particle size (long axis) and 5 in average axial ratio.

A 5 g quantity of the powder and 1 g of modified polyvinyl chloride-acetate resin were admixed with and dispersed in 12.5 g of a solvent mixture of methyl ethyl ketone, toluene and cyclohexanone to prepare a magnetic coating composition, which was then applied to a polyethylene terephthalate (PET) film to a thickness of about 5 $\mu$m (as dried) in an orientation magnetic field to obtain a magnetic sheet. The sheet was 1911 Oe in coercive force, 4509 G in residual magnetic flux density Br, 0.868 in square ratio Sq (Br/Bm) and 0.439 in switching field distribution SFD.

Examples 2 to 4

Powders containing metallic iron were prepared in the same manner as in Example 1 with the exception of using the corresponding coating compounds listed in Table 1 or 2. Table 1 or 2 shows the magnetic characteristics of the powders obtained. In Table 1, Nd compound (i) stands for $Nd(CH_3COO)_3 \cdot H_2O$, and W compound (ii) $(NH_4)_{10}W_{10}O_{41} \cdot 5H_2O$.

Example 5

Powder containing metallic iron was prepared in the same manner as in Example 1 with the exception of using the corresponding starting material having an average axial ratio of 10. Table 2 shows the magnetic characteristics of the powders obtained.

Example 6

A 40 g quantity of the powder coated with Zr, Nb and Co obtained in the same manner as in Example 1 was placed into a reactor tube and treated with CO at a flow rate of 5 liters/min at 350 °C for 2.5 hours. With the gas replaced by nitrogen, the powder was cooled approximately to room temperature, and the gas was thereafter gradually replaced by air to obtain a powder containing iron carbide. The X-ray (Cu K$\alpha$ source) diffraction pattern of the product was found to be identical with that of ASTM, X-Ray Powder Data File 20-509, $Fe_5C_2$. The powder had the magnetic characteristics of 895 Oe in coercive force Hc and 93.2 emu/g in saturation magnetization $\sigma$ s. When observed under a transmission electron microscope, the powder was 0.16 $\mu$m in average particle size (long axis) and 6 in average axial ratio. Table 2 shows the results.

Comparative Example 1

Powder containing metallic iron was prepared in the same manner as in Example 1 except that niobium compound was not coated. Table 3 shows the magnetic characteristics of the powders obtained.

In the Tables, product A stands for fine particles containing iron carbide, product B fine particles containing iron carbide and metallic iron, and product C fine particles containing metallic iron.

Table 1

| starting material | Example | | |
|---|---|---|---|
| | 1 | 2 | 3 |
| average size (long axis) | 0.17 $\mu$m | 0.17 $\mu$m | 0.17 $\mu$m |
| average axial ratio | 6 | 6 | 6 |
| coated element (atomic %) | | | |
| Zr/Fe | 1.4 | 1.4 | - |
| Nd/Fe | - | - | 0.75 |
| Nb/Fe | 0.19 | - | - |
| Ta/Fe | - | 0.15 | - |
| W/Fe | - | - | 0.15 |
| Co/Fe | 18 | 18 | 18 |
| coated compound | $ZrCl_4$ $NbCl_5$ $CoSO_4 \cdot 7H_2O$ | $ZrCl_4$ $TaF_5$ $CoSO_4 \cdot 7H_2O$ | Nd compound (i ) W compound (ii ) $CoSO_4 \cdot 7H_2O$ |
| product | C | C | C |
| powder characteristics | | | |
| average size (long axis) | 0.13 $\mu$m | 0.13 $\mu$m | 0.13 $\mu$m |
| average axia ratio | 5 | 5 | 5 |
| Hc (Oe) | 1875 | 1864 | 1817 |
| saturation magnetization (emu/g) | 160.2 | 159.7 | 158.2 |
| corrosion resistance (% ) | 20.5 | 19.2 | 18.8 |
| sheet characteristics | | | |
| Hc (Oe) | 1911 | 1898 | 1853 |
| residual magnetic flux density (G) | 4509 | 4014 | 4084 |
| square ratio (Br/Bm) | 0.868 | 0.857 | 0.844 |
| SFD | 0.439 | 0.460 | 0.466 |

Table 2

| starting material | Example | | |
|---|---|---|---|
| | 4 | 5 | 6 |
| average size (long axis) | 0.17 μm | 0.23 μm | 0.17 μm |
| average axial ratio | 6 | 10 | 6 |
| coated element (atomic %) | | | |
| Zr/Fe | 1.4 | 1.4 | 1.4 |
| Nd/Fe | - | - | - |
| Nb/Fe | 0.44 | - | - |
| Ta/Fe | - | 0.19 | 0.19 |
| W/Fe | - | - | - |
| Co/Fe | 18 | 18 | 18 |
| coated compound | $ZrCl_4$ | $ZrCl_4$ | $ZrCl_4$ |
| | $CaCl_2$ | $NbCl_5$ | $NbCl_5$ |
| | $CoSO_4 \cdot 7H_2O$ | $CoSO_4 \cdot 7H_2O$ | $CoSO_4 \cdot 7H_2O$ |
| product | C | C | A |
| powder characteristics | | | |
| average size (long axis) | 0.13 μm | 0.17 μm | 0.16 μm |
| average axia ratio | 5 | 9 | 6 |
| Hc (Oe) | 1830 | 1907 | 895 |
| saturation magnetization (emu/g) | 158.9 | 160.5 | 93.2 |
| corrosion resistance (% ) | 21.6 | 20.8 | 14.2 |
| sheet characteristics | | | |
| Hc (Oe) | 1913 | 1949 | 981 |
| residual magnetic flux density (G) | 4333 | 3989 | 2856 |
| square ratio (Br/Bm) | 0.860 | 0.892 | 0.814 |
| SFD | 0.448 | 0.386 | 0.525 |

Table 3

| starting material | Com. Example |
|---|---|
| | 1 |
| average size (long axis) | 0.17 μm |
| average axial ratio | 6 |
| coated element (atomic %) | |
| Zr/Fe | 1.4 |
| Nd/Fe | - |
| Nb/Fe | - |
| Ta/Fe | - |
| W/Fe | - |
| Co/Fe | 18 |
| coated compound | $ZrCl_4$ |
| | $CoSO_4 \cdot 7H_2O$ |
| product | C |
| powder characteristics | |
| average size (long axis) | 0.13 μm |
| average axia ratio | 5 |
| Hc (Oe) | 1765 |
| saturation magnetization (emu/g) | 164.5 |
| corrosion resistance (% ) | 17.3 |
| sheet characteristics | |
| Hc (Oe) | 1780 |
| residual magnetic flux density (G) | 3822 |
| square ratio (Br/Bm) | 0.823 |
| SFD | 0.695 |

**Claims**

1. A fine particulate magnetic material containing at least one substance selected from an iron carbide and metallic iron and further containing or not containing carbon, the iron carbide and the metallic iron being coated with: (a) a compound containing at least one atom selected from among atoms of Group II of the Periodic Table in Periods 3, 4, 5 and 6 and atoms of Groups V and VI thereof in Periods 4, 5 and 6.

2. A fine particulate magnetic material as defined in claim I which contains the iron carbide coated with the compound (a) and which may further contain carbon.

3. A fine particulate magnetic material as defined in claim I which contains the iron carbide and the metallic iron both coated with the compound (a) and which may further contain carbon.

4. A fine particulate magnetic material as defined in claim I which contains the metallic iron coated with the compound (a), and carbon.

5. A fine particulate magnetic material containing at least one substance selected from an iron carbide and metallic iron and further containing or not containing carbon, the iron carbide and the metallic iron being coated with:

   (a) a compound containing at least one atom selected from among atoms of Group II of the Periodic Table in Periods 3, 4, 5 and 6 and atoms of Groups V and VI thereof in Periods 4, 5 and 6, and with a compound selected from the group consisting of:
   (b) a compound containing at least one atom selected from among atoms of Groups III and IV of the Periodic Table in Periods 5 and 6, and
   (c) a compound containing at least one atom selected from among atoms of Groups VII to XI of the Periodic Table in Period 4.

6. A fine particulate magnetic material as defined in claim 5 which contains the iron carbide coated with the compound (a) and with a compound selected from the group consisting of the compounds (b) and (c) and which may further contain carbon.

7. A fine particulate magnetic material as defined in claim 5 which contains the iron carbide and the metallic iron both coated with the compound (a) and with a compound selected from the group consisting of the compounds (b) and (c) and which may further contain carbon.

8. A fine particulate magnetic material as defined in claim 5 which contains the metallic iron coated with the compound (a) and with a compound selected from the group consisting of the compounds (b) and (c), and carbon.

9. A fine particulate magnetic material containing at least one substance selected from an iron carbide and metallic iron and further containing or not containing carbon, the iron carbide and the metallic iron being coated with:

   (a) a compound containing at least one atom selected from among atoms of Group II of the Periodic Table in Periods 3, 4, 5 and 6 and atoms of Groups V and VI thereof in Periods 4, 5 and 6,
   (b) a compound containing at least one atom selected from among atoms of Groups III and IV of the Periodic Table in Periods 5 and 6, and
   (c) a compound containing at least one atom selected from among atoms of Groups VII to XI of the Periodic Table in Period 4.

10. A fine particulate magnetic material as defined in claim 9 which contains the iron carbide coated with the compound (a), the compound (b) and the compound (c) and which may further contain carbon.

11. A fine particulate magnetic material as defined in claim 9 which contains the iron carbide and the metallic iron both coated with the compound (a), the compound (b) and the compound (c) and which may further contain carbon.

12. A fine particulate magnetic material as defined in claim 9 which contains the metallic iron coated with the compound (a), the compound (b) and the compound (c), and carbon.

13. A fine particulate material as defined in claims I to 4 which is further coated with a compound containing at least one atom selected from among atoms of Groups XIII and XIV of the Periodic Table in Period 3.

14. A fine particulate material as defined in claims 5 to 12 which is further coated with a compound containing at least one atom selected from among atoms of Groups XIII and XIV of the Periodic Table in Period 3.

15. A fine particulate material as defined in claims 1 to 14 wherein the atom of (a) is Nb or Ta.

16. A fine particulate material as defined in claims 1 to 14 wherein the atom of (a) is W or Mo.

17. A fine particulate material as defined in claims 1 to 14 wherein the atom of (a) is Ca.

18. A fine particulate material as defined in claims 5 to 12 or claim 14 wherein the atom of (b) is Nd or Zr.

19. A fine particulate material as defined in claims 5 to 12 or claims 14 to 18 wherein the atom of (c) is Co.

20. A fine particulate material as defined in claims 1 to 19 wherein the atom of (a) is Nb, the atom of (b) is Zr and the atom of (c) is Co.

21. A fine particulate material as defined in claim 20 wherein the fine particulate material is coated with 0.02 to 5 atomic % of Nb, 0.1 to 10 atomic % of Zr and 0.2 to 50 atomic % of Co based on the iron atom.

22. A fine particulate material as defined in claims 1 to 21 wherein the fine particulate material is 0.01 to 2.0 $\mu$m in average particle size (long axis), and 1 to 20 in average axial ratio.

23. A fine particulate material as defined in claim 22 wherein the fine particulate material is 0.05 to 0.3 $\mu$m in average particle size (long axis), and 3 to 10 in average axial ratio.

24. A fine particulate material as defined in claims 1 to 14 wherein the fine particulate material contains 10 to 75 wt.% of iron carbide, 15 to 80 wt.% of metallic iron and 5 to 13 wt.% of carbon.

25. A fine particulate material as defined in claims 1 to 14 wherein the fine particulate material contains metallic iron and contains 2 to 20 wt.% of carbon based on the metallic iron.

26. A fine particulate material as defined in claims 1 to 25 wherein the iron carbide is predomonantly $Fe_5C_2$.

27. A fine particulate material as defined in claims 1 to 26 wherein the fine particulate material contains at least 20 % of iron carbide.

28. A process for preparing a fine particulate material containing an iron carbide, the iron carbide being defined in claim I, the process comprises the steps of:

   (A) coating a starting material iron compound selected from among iron oxyhydroxides and iron oxides with:

   (a) a compound containing at least one atom selected from among atoms of Group II of the Periodic Table in Periods 3, 4, 5 and 6 and atoms of Groups V and VI thereof in Periods 4, 5 and 6, and

   (B) contacting with heating the iron compound coated by the step (A) with a reducing agent containing no carbon atom when required and thereafter contacting the iron compound with a reducing-carbonizing agent containing a carbon atom or a mixture of the reducing-carbonizing agent and a reducing agent containing no carbon atom with heating.

29. A process for preparing a fine particulate material containing an iron carbide, the iron carbide being defined in claim 5, the process comprises the steps of:

   (A) coating a starting material iron compound selected from among iron oxyhydroxides and iron oxides with:

   (a) a compound containing at least one atom selected from among atoms of Group II of the Periodic Table in Periods 3, 4, 5 and 6 and atoms of Groups V and VI thereof in Periods 4, 5 and 6, and with a compound selected from the group consisting of:
   (b) a compound containing at least one atom selected from among atoms of Groups III and IV of the Periodic Table in Periods 5 and 6, and
   (c) a compound containing at least one atom selected from among atoms of Groups VII to XI of the Periodic Table in Period 4, and

   (B) contacting with heating the iron compound coated by the step (A) with a reducing agent containing no carbon atom when required and thereafter contacting the iron compound with a reducing-carbonizing agent containing a carbon atom or a mixture of the reducing-carbonizing agent and a reducing agent containing no carbon atom with heating.

30. A process for preparing a fine particulate material containing an iron carbide, the iron carbide being defined in claim 9, the process comprises the steps of:

   (A) coating a starting material iron compound selected from among iron oxyhydroxides and iron oxides with:

   (a) a compound containing at least one atom selected from among atoms of Group II of the Periodic Table in Periods 3, 4, 5 and 6 and atoms of Groups V and VI thereof in Periods 4, 5 and 6,
   (b) a compound containing at least one atom selected from among atoms of Groups III and IV of the Periodic Table in Periods 5 and 6, and

(c) a compound containing at least one atom selected from among atoms of Groups VII to XI of the Periodic Table in Period 4, and

(B) contacting with heating the iron compound coated by the step (A) with a reducing agent containing no carbon atom when required and thereafter contacting the iron compound with a reducing-carbonizing agent containing a carbon atom or a mixture of the reducing-carbonizing agent and a reducing agent containing no carbon atom with heating.

31. A process for preparing a fine particulate material containing an iron carbide and metallic iron, the iron carbide and the metallic iron being defined in claim I, the process comprises the steps of:

(A) coating a starting material iron compound selected from among iron oxyhydroxides and iron oxides with the compound (a),
(B) contacting with heating the iron compound coated by the step (A) with a reducing agent containing no carbon atom when required and thereafter contacting the iron compound with a reducing-carbonizing agent containing a carbon atom or a mixture of the reducing-carbonizing agent and a reducing agent containing no carbon atom with heating, and
(C) contacting the reaction product obtained by the step (B) with a mixture of a reducing agent containing no carbon atom and a reduction controlling agent with heating.

32. A process for preparing a fine particulate material containing an iron carbide and metallic iron, the iron carbide and metallic iron being defined in claim 5, the process comprises the steps of:

(A) coating a starting material iron compound selected from among iron oxyhydroxides and iron oxides with the compound (a), and with a compound selected from the group consisting of the compound (b) and the compound (c),
(B) contacting with heating the iron compound coated by the step (A) with a reducing agent containing no carbon atom when required and thereafter contacting the iron compound with a reducing-carbonizing agent containing a carbon atom or a mixture of the reducing-carbonizing agent and a reducing agent containing no carbon atom with heating, and
(C) contacting the reaction product obtained by the step (B) with a mixture of a reducing agent containing no carbon atom and a reduction controlling agent with heating.

33. A process for preparing a fine particulate material containing an iron carbide and metallic iron, the iron carbide and metallic iron being defined in claim 9, the process comprises the steps of:

(A) coating a starting material iron compound selected from among iron oxyhydroxides and iron oxides with the compound (a), the compound (b) and the compound (c),
(B) contacting with heating the iron compound coated by the step (A) with a reducing agent containing no carbon atom when required and thereafter contacting the iron compound with a reducing-carbonizing agent containing a carbon atom or a mixture of the reducing-carbonizing agent and a reducing agent containing no carbon atom with heating, and
(C) contacting the reaction product obtained by the step (B) with a mixture of a reducing agent containing no carbon atom and a reduction controlling agent with heating.

34. A process for preparing a fine particulate material containing a metallic iron, the metallic iron being defined in claim I, the process comprises the steps of:

(A) coating a starting material iron compound selected from among iron oxyhydroxides and iron oxides with the compound (a),
(B) contacting with heating the iron compound coated by the step (A) with a reducing agent containing no carbon atom when required and thereafter contacting the iron compound with a reducing-carbonizing agent containing a carbon atom or a mixture of the reducing-carbonizing agent and a reducing agent containing no carbon atom with heating, and
(C) contacting the reaction product obtained by the step (B) with a reducing agent containing no carbon atom with heating.

35. A process for preparing a fine particulate material containing a metallic iron, the metallic iron being defined in claim 5, the process comprises the steps of:

(A) coating a starting material iron compound selected from among iron oxyhydroxides and iron oxides with the compound (a), and with a compound selected from the group consisting of the compound (b) and the compound (c),
(B) contacting with heating the iron compound coated by the step (A) with a reducing agent containing no carbon atom when required and thereafter contacting the iron compound with a reducing-carbonizing agent containing a carbon atom or a mixture of the reducing-carbonizing agent and a reducing agent containing no carbon atom with heating, and
(C) contacting the reaction product obtained by the step (B) with a reducing agent containing no carbon atom with heating.

36. A process for preparing a fine particulate material containing a metallic iron, the metallic iron being defined in claim 9, the process comprises the steps of:

(A) coating a starting material iron compound selected from among iron oxyhydroxides and iron oxides with the compound (a), the compound (b) and the compound (c),
(B) contacting with heating the iron compound coated by the step (A) with a reducing agent containing no carbon atom when required and thereafter contacting the iron compound with a reducing-carbonizing agent containing a carbon atom or a mixture of the reducing-carbonizing agent and a reducing agent containing no carbon atom with heating, and
(C) contacting the reaction product obtained by the step (B) with a reducing agent containing no carbon atom with heating.

37. A process for preparing a fine particulate material containing an iron carbide, the iron carbide being defined in claim I, the process comprises the steps of contacting with heating a starting material iron compound selected from among iron oxyhydroxides and iron oxides coated with the compound (a) with a reducing agent containing no carbon atom when required and thereafter contacting the iron compound with a reducing-carbonizing agent containing a carbon atom or a mixture of the reducing-carbonizing agent and a reducing agent containing no carbon atom with heating.

38. A process for preparing a fine particulate material containing an iron carbide, the iron carbide being defined in claim 5, the process comprises the steps of contacting with heating a starting material iron compound selected from among iron oxyhydroxides and iron oxides coated with the compound (a), and with a compound selected from the group consisting of the compound (b) and the compound (c), with a reducing agent containing no carbon atom when required and thereafter contacting the iron compound with a reducing-carbonizing agent containing a carbon atom or a mixture of the reducing-carbonizing agent and a reducing agent containing no carbon atom with heating.

39. A process for preparing a fine particulate material containing an iron carbide and metallic iron, the iron carbide and metallic iron being defined in claim 9, the process comprises the steps of contacting with heating a starting material iron compound selected from among iron oxyhydroxides and iron oxides coated with the compound (a), the compound (b) and the compound (c), with a reducing agent containing no carbon atom when required and thereafter contacting the iron compound with a reducing-carbonizing agent containing a carbon atom or a mixture of the reducing-carbonizing agent and a reducing agent containing no carbon atom with heating.

40. A process for preparing a fine particulate material containing an iron carbide and metallic iron, the iron carbide and metallic iron being defined in claim I, the process comprises the steps of:

(A) contacting with heating a starting material iron compound selected from among iron oxyhydroxides and iron oxides coated with the compound (a) with a reducing agent containing no carbon atom when required and thereafter contacting the iron compound with a reducing-carbonizing agent containing a carbon atom or a mixture of the reducing-carbonizing agent and a reducing agent containing no carbon atom with heating, and
(B) contacting the reaction product obtained by the step (A) with a mixture of a reducing agent containing no carbon atom and a reduction controlling agent with heating.

41. A process for preparing a fine particulate material containing an iron carbide and metallic iron, the iron carbide and metallic iron being defined in claim 5, the process comprises the steps of:

(A) contacting with heating a starting material iron compound selected from among iron oxyhydroxides and iron oxides coated with the compound (a), and with a compound selected from the group consisting of the compound (b) and the compound (c), with a reducing agent containing no carbon atom when required and thereafter contacting the iron compound with a reducing-carbonizing agent containing a carbon atom or a mixture of the reducing-carbonizing agent and a reducing agent containing no carbon atom with heating, and

(B) contacting the reaction product obtained by the step (A) with a mixture of a reducing agent containing no carbon atom and a reduction controlling agent with heating.

42. A process for preparing a fine particulate material containing an iron carbide and metallic iron, the iron carbide and metallic iron being defined in claim 9, the process comprises the steps of:

(A) contacting with heating a starting material iron compound selected from among iron oxyhydroxides and iron oxides coated with the compound (a), the compound (b) and the compound (c), with a reducing agent containing no carbon atom when required and thereafter contacting the iron compound with a reducing-carbonizing agent containing a carbon atom or a mixture of the reducing-carbonizing agent and a reducing agent containing no carbon atom with heating, and
(B) contacting the reaction product obtained by the step (A) with a mixture of a reducing agent containing no carbon atom and a reduction controlling agent with heating.

43. A process for preparing a fine particulate material containing a metallic iron, the metallic iron being defined in claim l, the process comprises the steps of:

(A) contacting with heating a starting material iron compound selected from among iron oxyhydroxides and iron oxides coated with the compound (a) with a reducing agent containing no carbon atom when required and thereafter contacting the iron compound with a reducing-carbonizing agent containing a carbon atom or a mixture of the reducing-carbonizing agent and a reducing agent containing no carbon atom with heating, and
(B) contacting the reaction product obtained by the step (A) with a reducing agent containing no carbon atom with heating.

44. A process for preparing a fine particulate material containing a metallic iron, the metallic iron being defined in claim 5, the process comprises the steps of:

(A) contacting with heating a starting material iron compound selected from among iron oxyhydroxides and iron oxides coated with the compound (a), and with a compound selected from the group consisting of the compound (b) and the compound (c), with a reducing agent containing no carbon atom when required and thereafter contacting the iron compound with a reducing-carbonizing agent containing a carbon atom or a mixture of the reducing-carbonizing agent and a reducing agent containing no carbon atom with heating, and
(B) contacting the reaction product obtained by the step (A) with a reducing agent containing no carbon atom with heating.

45. A process for preparing a fine particulate material containing a metallic iron, the metallic iron being defined in claim 9, the process comprises the steps of:

(A) contacting with heating a starting material iron compound selected from among iron oxyhydroxides and iron oxides coated with the compound (a), the compound (b) and the compound (c), with a reducing agent containing no carbon atom when required and thereafter contacting the iron compound with a reducing-carbonizing agent containing a carbon atom or a mixture of the reducing-carbonizing agent and a reducing agent containing no carbon atom with heating, and
(B) contacting the reaction product obtained by the step (A) with a reducing agent containing no carbon atom with heating.

46. A process as defined in claims 28 to 36 which further comprises the step of coating the resulting product with a compound containing at least one atom selected from among atoms of Groups XIII and XIV of the Periodic Table in Period 3.

47. A process as defined in claims 37 to 45 wherein the starting material iron compound to be used is coated with a compound containing at least one atom selected from among atoms of Groups XIII and XIV of the Periodic Table in Period 3.

48. A process as defined in claim 28 to 47 wherein the starting material iron compound selected from among iron oxyhydroxides and iron oxides has an average particle size (long axis) of 0.01 to 1.0 $\mu$m and an average axial ratio of 1 to 20.

49. A process as defined in claim 48 wherein the average particle size (long axis) is 0.05 to 0.3 $\mu$m and the average axial ratio is 3 to 10.

50. A magnetic coating composition containing as a magnetic material a fine particulate magnetic material of claims 1 to 27.

51. A magnetic recording medium containing as a magnetic material a fine particulate magnetic material of claims l to 27.

52. A magnetic recording medium comprising a magnetic coating composition of claim 50 and applied to a substrate.

EP 0 762 441 A1

## INTERNATIONAL SEARCH REPORT

| International application No. |
|---|
| PCT/JP95/00965 |

### A. CLASSIFICATION OF SUBJECT MATTER

Int. Cl$^6$ H01F1/06, 1/11, B22F1/02, 9/18, G11B5/712, C01G49/00

According to International Patent Classification (IPC) or to both national classification and IPC

### B. FIELDS SEARCHED

Minimum documentation searched (classification system followed by classification symbols)

Int. Cl$^6$ H01F1/06, 1/11, B22F1/02, 9/18, G11B5/712, C01G49/00

Documentation searched other than minimum documentation to the extent that such documents are included in the fields searched

| | |
|---|---|
| Jitsuyo Shinan Koho | 1926 - 1995 |
| Kokai Jitsuyo Shinan Koho | 1971 - 1995 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP, 61-186410, A (Dainippon Ink and Chemicals, Inc.), August 20, 1986 (20. 08. 86), | 1 - 27, 50 - 52 |
| Y | Claim, lines 17 to 19, upper left column, page 2 (Family: none) | 28 - 49 |
| Y | JP, 4-65309, A (Daikin Industries, Ltd.), March 2, 1992 (02. 03. 92), Claim & EP, 464745, A | 28 - 49 |
| X | JP, 63-265823, A (Chisso Corp.), November 2, 1988 (02. 11. 88), Claim (Family: none) | 1 |
| X | JP, 3-244107, A (Hitachi Maxell, Ltd.), October 30, 1991 (30. 10. 91), Claim (Family: none) | 1 |
| X | JP, 56-166310, A (Mitsubishi Metal Corp.), December 21, 1981 (21. 12. 81), Claim (Family: none) | 1 |

☑ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| August 30, 1995 (30. 08. 95) | September 19, 1995 (19. 09. 95) |

| Name and mailing address of the ISA/ Japanese Patent Office | Authorized officer |
|---|---|
| Facsimile No. | Telephone No. |

Form PCT/ISA/210 (second sheet) (July 1992)

19